# NEUE EUROPÄISCHE PATENTSCHRIFT

(11) **EP 0 921 329 B2**
(45) Veröffentlichungstag und Bekanntmachung des Hinweises auf die Entscheidung über den Einspruch: **02.11.2005**
(45) Hinweis auf die Patenterteilung: 31.10.2001
(21) Anmeldenummer: 97121486.1
(22) Anmeldetag: 06.12.1997
(51) Int. Cl.: F16D 3/223

(54) **Verfahren zur Fertigbearbeitung des Kugelsterns eines Gleichlaufgelenkes**
Method for finishing the inner member of a universal joint
Procédé de finition de l'élément intérieur d'un joint universel

(43) Veröffentlichungstag der Anmeldung: 09.06.1999
(73) Patentinhaber: Iprotec Maschinen- und Edelstahlprodukte GmbH, 32469 Petershagen-Friedewalde (DE)
(72) Erfinder:
(74) Vertreter: Bauer, Wulf

(56) Entgegenhaltungen:
- WO-A-96/38680
- DE-A- 4 034 516
- DE-A- 4 034 517
- DE-A- 19 507 859
- DE-U- 1 925 052
- US-A- 4 437 331
- US-A- 4 861 316
- Prospekt "Form-Dreh-Zentrum FDZ 100" der Hecker & Koch Maschinen- und Anlagenbau GmbH
- Fertigungsverfahren Band 1, Drehen, Fräsen, Bohren, W.König, VDI-Verlag, 1990
- Eidesstattliche Versicherung von Herrn H-H Welschof im Lochseif 68a, D-63517 Rodenbach
- Unrunddrehen mit dem CNC-Formdrehzentrum FDZ-100, Dieter Hofmann; VDI-Z 133 (1991); nr. 6
- Zeitschrift für Maschinenbau, Konstruktion und Fertigung 5/94, Hartdrehen statt Schleifen; Preis, Aschner, Kunz; Werkstatt und Betrieb 127 (1994)5

## Beschreibung

Die Erfindung betrifft ein Verfahren zur Fertigbearbeitung des Kugelsterns eines Gleichlaufgelenkes, insbesondere für Kraftfahrzeuge, mit einer kugelringförmigen Lagerfläche für die Lagerung in einem Kugelkäfig und mit einer Mehrzahl von diese kugelringförmige Lagerfläche unterbrechenden, im wesentlichen axial verlaufenden Führungsbahnen für die in Kugeltaschen des Kugelkäfigs angeordneten, Drehmomente zwischen der Kugelschale und dem Kugelstern übertragenden Kugeln.

Die gleichzeitige europäische Anmeldungen des Anmelders IPROTEC, EP.A.0 926 373 and EP.A.0 952 364, betreffen ähnliche Verfahren zur Fertigbearbeitung der Kugelschale bzw. des Kugelkäfigs

Bei Kraftfahrzeugen mit Vorderradantrieb werden die gelenkten Räder angetrieben. Deshalb müssen Vorderradachswellen Gelenke haben, die sowohl das Ein- und Ausfedern der Räder als auch deren Lenkeinschlag zulassen. Um einen möglichst gleichförmigen Antrieb der Räder zu ermöglichen, werden hierzu Gleichlaufgelenke (homokinetische Gelenke) verwendet. Bei Gelenken an Vorderachswellen werden hierbei unter anderem als Topfgelenke ausgebildete Gleichlauf-Festgelenke verwendet, während bei Gelenken an Hinterachswellen als Topfgelenke ausgebildete Gleichlauf-Verschiebegelenke verwendet werden, die neben einer Beugung des Gelenks eine axiale Verschiebung ermöglichen.

Diese Topfgelenke bestehen aus einem auf das radseitige Achswellenende aufgesetzten Kugelstern, auf dem der Kugelkäfig mit Kugeln sowie die mit der Radantriebswelle verbundene Kugelschale sitzen. Bei dem Gleichlauf-Festgelenk weisen Kugelschale und Kugelstern gekrümmte Bahnen auf, auf denen sich die Kugeln bewegen. Bei dem Gleichlauf-Verschiebegelenk sind die Bewegungsbahnen an Kugelschale und Kugelstern eben ausgebildet.

Bei den aus der Praxis bekannten, aus Kugelstern, Kugelkäfig und Kugelschale bestehenden Gleichlaufgelenken erfolgt die Fertigbearbeitung des mit einer kugelringförmigen Lagerfläche für die Lagerung in einem Kugelkäfig sowie mit Führungsbahnen für die Kugeln versehenen Kugelsterns in einer Vielzahl unterschiedlicher Arbeitsschritte, die zum Teil auf verschiedenen Maschinen durchgeführt werden. Ausgehend von einem Kugelstern-Rohling werden bei den bekannten Fertigbearbeitungsverfahren die Führungsbahnen durch Räumen und Fräsen hergestellt, während die Lagerfläche durch Drehen hergestellt wird. Insbesondere bei der Fertigbearbeitung von Kugelsternen von Gleichlauf-Festgelenken ist die Bearbeitung sehr aufwendig, da sowohl die Lagerfläche als auch die Führungsbahnen in Achsrichtung der Lagerschale gekrümmt ausgebildet sind.

Nachteilig bei diesem bekannten Herstellungsverfahren ist, daß durch die Verwendung unterschiedlicher spannabhebender Bearbeitungsverfahren, zu denen der zu bearbeitende Kugelstern mehrfach umgespannt und eventuell unterschiedlichen Maschinen zugeführt werden muß, die Fertigbearbeitung des Kugelsterns sehr zeitaufwendig und somit teuer ist. Darüber hinaus treten aufgrund der verschiedenen Umspannungen Fehler auf, so daß Toleranzen nur in bestimmten Grenzen möglich sind.

Die US 4 861 316 beschreibt die Fertigung von Bauteilen eines Gleichlaufgelenkes, insbesondere eines Kugelsterns Demnach ist es notwendig, aufgrund hoher Anforderungen die Bauteile mit einem Schleifverfahren fertigzubearbeiten.

Auch die US 4 575 362 zeigt, dass Bauteile eines Gleichlaufgelenkes durch Drehen hergestellt, auschließend gehärtet und schließlich geschliffen werden.

Die "Zeitschrift für Maschinenban, Konstruktion und Fertigung 5/94" beschreibt Schwierigkeiten, die beim Hartdrehen statt Schleifen gegeben sind. Das Hartdrehen mit unterbrodenem Schnitt ist bei Auswahl eines geeigneten Werkstoffes moglich.

Der Artikel "Umrunddrehen mit dem CNC-Formdrehzentrum FDZ 100" aus der Zeitschrift "VDI-Zeitung 133 (1991), No. 6 Sowie ein Prospekt über dieses Formdrehzentrum des Heckler und Koch Maschinen- und Anlagebau GmbH beschreiben, dass er moglich ist, Bauteile mit einem Umrunddrehverfahren herzustellen. Gezeigt ist ein Bild eines kugelsterns.

Der Erfindung liegt die Aufgabe zugrunde, ein Verfahren zur Fertigbearbeitung des Kugelsterns eines Gleichlaufgelenkes bereitzustellen, welches eine einfache, kostengünstige und vollautomatisierbare Fertigbearbeitung von Kugelsternen ermöglicht, die darüber hinaus mit einer erhöhten Genauigkeit erfolgt.

Die Lösung dieser Aufgabenstellung erfolgt erfindungsgemäß durch ein Verfahren mit den Verfahrensschritten des Anspruchs 1.

Durch dieses erfindungscemäße Herstellungsverfahren ist es erstmalig möglich, den Kugelstern eines Gleichlaufgelenks durch ein einheitliches spannabhebendes Bearbeitungsverfahren, nämlich ein Hartdrehbearbeitungsverfahren herzustellen, wobei die Bearbeitung in einer Aufspannung erfolgt. Infolge der Bearbeitung nur durch Hartdrehbearbeitung auf einer Maschine ergibt sich gegenüber den aus der Praxis bekannten Fertigbearbeitungsverfahren ein eindeutiger Zeit-, Kosten- und Genauigkeitsvorteil für das erfindungsgemäße Verfahren.

Gemäß einer praktischen Ausführungsform der Erfindung wird vorgeschlagen, daß der axiale Verlauf der Führungsbahnen rein sphärisch ausgebildet ist. Weiterhin wird mit der Erfindung vorgeschlagen, daß der axiale Verlauf der Führungsbahnen aus einem zylindrischen und einem sphärischen Teil zusammengesetzt ist. Beide Kugelsternsorten werden für Gleichlauf-Festgelenke verwendet.

Gemäß einer praktischen Ausführungsform der Erfindung verlaufen die Berührungslinien der Kugeln mit den zugehörigen Führungsbahnen räumlich parallel zueinander. Insbesondere bei der Ausbildung der sphärischen Führungsbahnen wird weiterhin vorgeschlagen, daß der Abstand der Berührungslinien der Kugeln mit den zugehörigen Führungsbahnen sich in axialer Richtung verändert, wodurch eine Optimierung der Drehmomentübertragung erzielt wird.

Weiterhin wird mit der Erfindung vorgeschlagen, daß die Führungsbahnen unter einem spitzen Winkel zur Drehachse des Kugelsterns verlaufen.

Gemäß einer speziellen Ausführungsform der Erfindung wird vorgeschlagen, daß der Kugelstern mit einer polygonalen Ausnehmung zur Verbindung mit der Antriebswelle versehen ist. Durch die Ausbildung dieser polygonalen Ausnehmung zur Aufnahme der Antriebswelle, wobei die Antriebswelle eine entsprechende polygonale Außenkontur aufweist, ist es möglich, jegliches radiales Spiel im Bereich der Verbindung Kugelstern-Antriebswelle zu vermeiden, wie dies bei den aus dem Stand der Technik bekannten axialen Kerbverzahnungen der Fall ist.

Gemäß einer vorteilhaften Ausgestaltung dieses Kugelsterns ist die polygonale Ausnehmung in Achsrichtung konisch ausgebildet. Durch diese Konizität der polygonalen Ausnehmung sowie der polygonalen Außenkontur der Antriebswelle ergibt sich eine Selbstzentrierung der miteinander zu verbindenden Bauteile sowie eine sowohl in axialer als auch in radialer Richtung spielfreie Verbindung von Kugelstern und Antriebswelle. Weiterhin ergeben sich eine bessere Kraftübertragung, keine Kerbwirkungen sowie eine kleinere Bauart.

Weitere Merkmale und Vorteile der Erfindung ergeben sich aus der nachfolgenden Beschreibung der zugehörigen Zeichnung, in der schematisch der Aufbau eines Gleichlauf-Festgelenks mit einem erfindungsgemäß bearbeiteten Kugelstern dargestellt ist.

Das dargestellte Gleichlauf-Festgelenk 1 besteht aus einem über eine polygonale Ausnehmung 2a auf ein radseitiges Achswellenende der Antriebswelle aufgesetzten Kugelstern 2, auf dem ein Kugelkäfig 3 mit Kugeln 4 sowie eine mit einer Radantriebswelle 5 verbundene Kugelschale 6 sitzen.

Bei dem als Gleichlauf-Festgelenk 1 ausgebildeten Gleichlaufgelenk weisen Kugelschale 6 und Kugelstern 2 sphärisch gekrümmte Führungsbahnen 7 auf, auf denen sich die Kugeln 4 bewegen. Zur Lagerung des Kugelkäfigs 3 in der Kugelschale 6 weist die Kugelschale 6 eine kugelringförmige Lagerfläche 8 auf, während der Kugelstern 2 eine kugelringförmige Lagerfläche 2b zur Lagerung des Kugelsterns 2 im Kugelkäfig 3 aufweist.

Beim dargestellten Ausführungsbeispiel verlaufen die Berührungslinien 9 der Kugeln 4 mit der zugehörigen Führungsbahn 7 am Kugelstern 2 sowie in der Kugelschale 6 räumlich parallel zueinander.

Beim dargestellten Ausführungsbeispiel weist der Kugelstern 2 zur Verbindung mit dem radseitigen Achswellenende der Antriebswelle eine polygonale Ausnehmung 2a auf, in die die mit einer entsprechenden polygonalen Außenkontur ausgebildete Antriebswelle eingesetzt wird. Im Gegensatz zu der ebenfalls möglichen - und aus dem Stand der Technik bekannten - axialen Kerbverzahnung zwischen Kugelstern 2 und Antriebswelle bietet diese Polygonverbindung die Möglichkeit, eine in radialer Richtung spielfreie Verbindung zu schaffen.

Durch die zusätzliche konische Ausbildung in axialer Richtung der polygonalen Ausnehmung 2a einerseits sowie der polygonalen Außenkontur der Antriebswelle andererseits kann diese Verbindung darüber hinaus auch in axialer Richtung spielfrei ausgebildet werden.

Bei dem dargestellten Ausführungsbeispiel eines Gleichlauf-Festgelenks 1 sind Kugelschale 6 und Radantriebswelle 5 als separate Bauteile ausgebildet. Zur Verbindung der Kugelschale 6 mit der Radantriebswelle 5 ist im Boden der Lagerschale 6 eine polygonale Öffnung 10 ausgebildet, in die die Radantriebswelle 5 mit einem entsprechend geformten polygonalen Ansatz einsetzbar ist. Um eine Selbstzentrierung dieser polygonalen Anlageflächen zu erzielen, sind die polygonale Öffnung 10 sowie der polygonale Ansatz der Radantriebswelle 5 in Achsrichtung konisch ausgebildet.

Der von der Kugelschale 6 fortweisende Teil der Radantriebswelle 5 besteht aus einem zylindrischen Teil 5a zur Aufnahme des Radlagers sowie einem Verbindungsteil 5b zum Verbinden mit dem anzutreibenden Rad. Dieser Verbindungsteil 5b kann beispielsweise eine polygonale Außenkontur oder eine Außenverzahnung aufweisen.

Im Gegensatz zu dem dargestellten Ausführungsbeispiel ist es selbstverständlich auch möglich, Kugelschale 6 und Radantriebswelle 5 als einstückiges Bauteil auszubilden.

### Bezugszeichenliste

- 1: Gleichlauf-Festgelenk
- 2: Kugelstern
- 2a: polygonale Ausnehmung
- 2b: Lagerfläche
- 3: Kugelkäfig
- 4: Kugel
- 5: Radantriebswelle
- 5a: zylindrischer Teil
- 5b: Verbindungsteil
- 6: Kugelschale
- 7: Führungsbahn
- 8: Lagerfläche
- 9: Berührungslinie
- 10: polygonale Öffnung

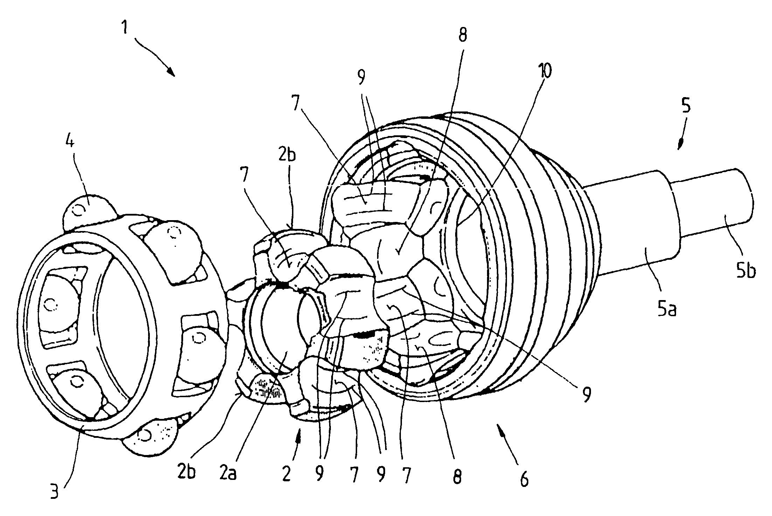

## Patentansprüche

1. Verfahren zur Fertigbearbeitung von gehärteten Kugelsternen, die für Gleichlaufgelenke, insbesondere für Kraftfahrzeuge, bestimmt sind, mit einer kugelringförmigen Lagerfläche (2b) für die Lagerung in einem Kugelkäfig (3) und einer Mehrzahl von diese kugelringförmige Lagerfläche (8) unterbrechenden im wesentlichen axial verlaufenden Führungsbahnen (7) für die in Kugeltaschen des Kugelkäfigs (3) angeordneten, Drehmomente zwischen Kugelschale (6) und Kugelstern (2) übertragenden Kugeln (4), und eine im Kugelstern angeordnete polygonale Ausnehmung (2a), die im Achsrichtung konisch ausgebildet ist, für die Verbindung mit einer Radantriebswelle (5)
wobei
sowohl die kugelringförmige Lagerfläche (2b) für die Lagerung im Kugelkäfig (3) als auch die Führungsbahnen (7) für die Kugeln (4) durch Hartdrehen bearbeitet werden.

2. Verfahren nach Anspruch 1, **dadurch gekennzeichnet, daß** der axiale Verlauf der Führungsbahnen (7) rein sphärisch ausgebildet ist.

3. Verfahren nach Anspruch 1, **dadurch gekennzeichnet, daß** der axiale Verlauf der Führungsbahnen (7) aus einem sphärischen und einem zylindrischen Teil zusammengesetzt ist.

4. Verfahren nach mindestens einem der Ansprüche 1 bis 3, **dadurch gekennzeichnet, daß** die Führungsbahnen (7) achsparallel verlaufen.

5. Verfahren nach mindestens einem der Ansprüche 1 bis 3, **dadurch gekennzeichnet, daß** d Führungsbahnen (7) unter einem spitzen Winkel zur Drehachse des Kugelsterns (2) verlaufen.

6. Verfahren nach mindestens einem der Ansprüche 1 bis 5, **dadurch gekennzeichnet, daß** die Berührungslinien (9) der Kugeln (4) mit den zugehörigen Führungsbahnen (7) räumlich parallel zueinander verlaufen.

7. Verfahren nach mindestens einem der Ansprüche 1 bis 5, **dadurch gekennzeichnet, daß** der Abstand der Berührungslinien (9) der Kugeln (4) mit den zugehörigen Führungsbahnen (7) sich in axialer Richtung verändert.

## Claims

1. A method of finishing hardened ball stars for constant velocity joints, in particular for motor vehicles, having a ball-race-shaped bearing surface (2b) for bearing in a ball cage (3) and a multiplicity of essentially axially running guideways (7) interrupting this ball-race-shaped bearing surface (2b) and intended for the balls (4) arranged in the ball pockets of the ball cage (3) and transmitting torque between the ball socket (6) and ball star (2), and a polygonal recess (2a) for connection with a wheel drive shaft (5), said recess is of conical design in the axial direction,
both the ball-race-shaped bearing surface (2b) for bearing in the ball cage (3) and the guide ways (7) for the balls (4) are machined by hard turning.

2. Method according to Claim 1, **characterized in that** the axial course of the guideways (7) is of purely spherical design.

3. Method according to Claim 1, **characterized in that** the axial course of the guideways (7) is composed of a spherical and a cylindrical part.

4. Method according to at least one of Claims 1 to 3, **characterized in that** the guideways (7) run in an axially parallel manner.

5. Method according to at least one of Claims 1 to 3, **characterized in that** the guideways (7) run at an acute angle to the axis of rotation of the ball star (2).

6. Method according to at least one of Claims 1 to 5, **characterized in that** the lines (9) of contact between the balls (4) and the associated guideways (7) run spatially parallel to one another.

7. Method according to at least one of Claims 1 to 5, **characterized in that the** spacing of the lines (9) of contact between the balls (4) and the associated guideways (7) changes in the axial direction.

## Revendications

1. Procédé d'usinage de finition de croisillons sphériques durcis destinés à être utilisés dans des joints homocinétiques, notamment dans des véhicules automobiles, avec une surface de logement (2b) en forme de bague sphérique destinée au logement dans une cage à billes (3) et avec une pluralité de voies de guidage (7) interrompant cette surface de logement (8) en forme de bague sphérique s'étendant pour l'essentiel axialement, destinée aux billes (4) disposées dans des alvéoles de billes de la cage (3) à billes qui transmettent des couples de rotation entre la coque sphérique (6) et le croisillon sphérique (2), et un évidement (2a) polygonal conformé pour être conique dans la direction axiale et destiné à assurer la liaison avec un arbre d'entraînement de roue (5), la surface de logement (2b) en forme de bague sphérique destinée au logement dans la cage à billes (3) comme les voies de guidage (7) des billes (4) étant usinées en tournage dur.

2. Procède selon la revendication 1, **caractérisé en ce que** l'extension axiale des voies de guidage (7) est agencée de façon purement sphérique.

3. Procède selon la revendication 1, **caractérisé en ce que** l'extension axiale des voies de guidage (7) est constituée d'une partie sphérique et d'une partie cylindrique.

4. Procède selon l'une au moins des revendications 1 à 3, **caractérisé en ce que** les voies de guidage (7) s'étendent parallèlement à l'axe.

5. Procède selon l'une au moins des revendications 1 à 3, **caractérisé en ce que** les voies de guidage (7) s'étendent suivant un angle aigu par rapport à l'axe de rotation du croisillon sphérique (2).

6. Procède selon l'une au moins des revendications 1 à 5, **caractérisé en ce que** les lignes de contact (9) des billes (4) s'étendent dans l'espace parallèlement aux voies de guidage associées (7).

7. Procède selon l'une au moins des revendications 1 à 5 **caractérisé en ce que** la distance entre les lignes de contact (9) des billes (4) et les voies de guidage associées (7) se modifie dans la direction axiale.
